**Europäisches Patentamt**

**European Patent Office**

**Office européen des brevets**

(19)

(11) Publication number : **0 514 138 A1**

(12)

# EUROPEAN PATENT APPLICATION

(21) Application number : **92304274.1**

(22) Date of filing : **12.05.92**

(51) Int. Cl.⁵ : **B23K 3/04**

(30) Priority : **13.05.91 JP 202615/91**

(43) Date of publication of application :
**19.11.92 Bulletin 92/47**

(84) Designated Contracting States :
**DE FR GB**

(71) Applicant : **Kanto Yakin Kogyo Kabushiki Kaisha**
**2543 Shinomiya**
**Hiratsuka-shi Kanagawa-ken (JP)**

(72) Inventor : **Takahashi, Susumu**
**236-50 Fujizuka**
**Hodogaya-ku, Yokohama (JP)**

(74) Representative : **Lord, Hilton David et al**
**Marks & Clerk 57-60 Lincoln's Inn Fields**
**London WC2A 3LS (GB)**

(54) **Improved brazing methods.**

(57)    The present invention provides a method for brazing articles using a continuous furnace, characterised in that the component parts of the article, together with the solder, are assembled and preheated until said component parts have reached a substantially uniform temperature near but below the brazing temperature and, once they have been so heated, the component parts are heated to a temperature whereat the solder melts, thereby only requiring the article to be maintained at the brazing temperature for a minimum duration.

EP 0 514 138 A1

Jouve, 18, rue Saint-Denis, 75001 PARIS

The present invention relates to methods for brazing articles using a continuous furnace.

Brazing methods using a continuous furnace are well known. In these methods, a plurality of metallic parts, which are to be brazed together, are brought into abutment in the presence of a suitable solder having a melting point lower than the metallic parts. The solder is deposited at portions of the metallic parts to be joined, and the assembly is passed through a continuous furnace whereby the metallic parts are not melted but the metallic solder is melted. The solder then penetrates openings between the metallic portions by capillary action, and the whole is then cooled.

In such brazing methods, it is generally not preferable for the metallic parts to be subjected for a long period of time to the high temperatures at which the solder melts. In fact, it is desirable to subject them to such high temperature for as short a period as possible.

For example, when steel is brazed using a copper solder for lengthy periods at high temperature, the solder can excessively penetrate into the crystalline spaces of the steel parts which can produce weak alloys of iron, resulting in reducing the mechanical strength of the joints. Thus, if brazing at a high temperature is continued for long periods, with the solder being kept liquid, the end result can be entirely undesirable.

In the case of brazing aluminium alloy parts, which are joined generally by means of a solder made of Al-Si alloys, the solder tends to make the aluminium metal of the aluminium alloy parts into a eutectic alloy, and to decompose the aluminium alloy structure of the parts, if the solder is melted and kept liquid for long periods.

The above drawbacks could be avoided if the temperatures of metallic parts to be brazed were raised evenly as a whole and then kept at a high brazing temperature only for a minimal period of time. However, such a way of heating the parts in a continuous brazing furnace is very difficult, because the parts do not have the same dimensional volume, nor do they have the same thermal characteristics.

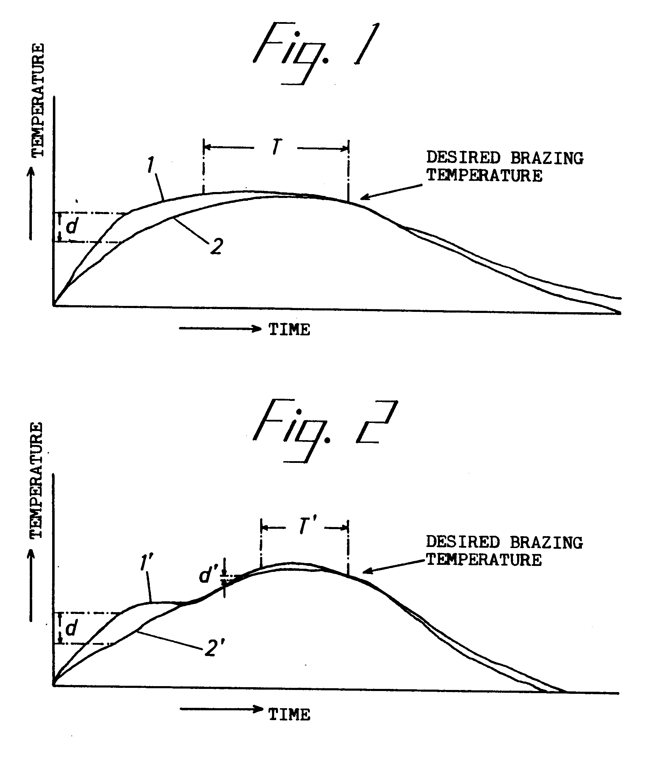

Figure 1 is illustrative of the problem. In this instance, an aluminium part having a thickness of 1 mm (the chart indicated at 1) and another aluminium part (the chart indicated at 2) having a thickness of 5 mm are heated together in a furnace. The thin plate 1 reaches the higher temperature first, as a natural consequence, while the thick plate 2 only belatedly reaches the higher temperature. Thus, if the heating curve is selected for the thinner part, the brazing solder on the thicker portion will not melt. On the other hand, if the heating curve is selected so as to be suitable for heating the thicker part, the thin part will overheat, thereby potentially adversely affecting its physical properties.

Thus, in a continuous heating furnace, it is inevitable that portions of the finished article which heat differently will be adversely affected, one way or the other. In order that all of the brazing solder be melted, the entire article must be heated for a sufficient duration that some of the solder, especially on the thinner portions of the article, is melted for long periods. Such a period is shown at T in Figure 1.

We have now discovered that the above disadvantages and problems can be overcome by substantially uniformly preheating the article to a high temperature which is lower than brazing temperature, and then heating the article to brazing temperature, so that exposure to brazing temperatures is kept to a minimum.

In order to have metallic articles to be brazed preheated evenly as a whole before transferring them into a brazing chamber of a continuous furnace where a high brazing temperature works, a difference of temperatures of parts of the articles during their preheating is remotely sensed by means of their infrared energies and is minimised as small as possible by changing a transfer speed of the articles during their preheating with reference to the information based upon the infrared energies then sensed. A brazing period of time in the brazing chamber is kept constant and short, irrespectively of the transfer speed of the articles.

In a first aspect, the present invention provides a method for brazing articles using a continuous furnace, characterised in that the component parts of the article, together with the solder, are assembled and preheated until said component parts have reached a substantially uniform temperature near but below the brazing temperature and, once they have been so heated, the component parts are heated to a temperature whereat the solder melts.

The advantage of the method of the invention is that the components of the article do not need to be kept at the brazing temperature for longer than is necessary. Once the components have reached a temperature close to the brazing temperature, the whole can then be heated. While the thicker portions will heat more slowly, because they are already close to the brazing temperature, they take a shorter time to reach it than they otherwise would. This means that the thinner portions do not have to spend so long at the brazing temperature.

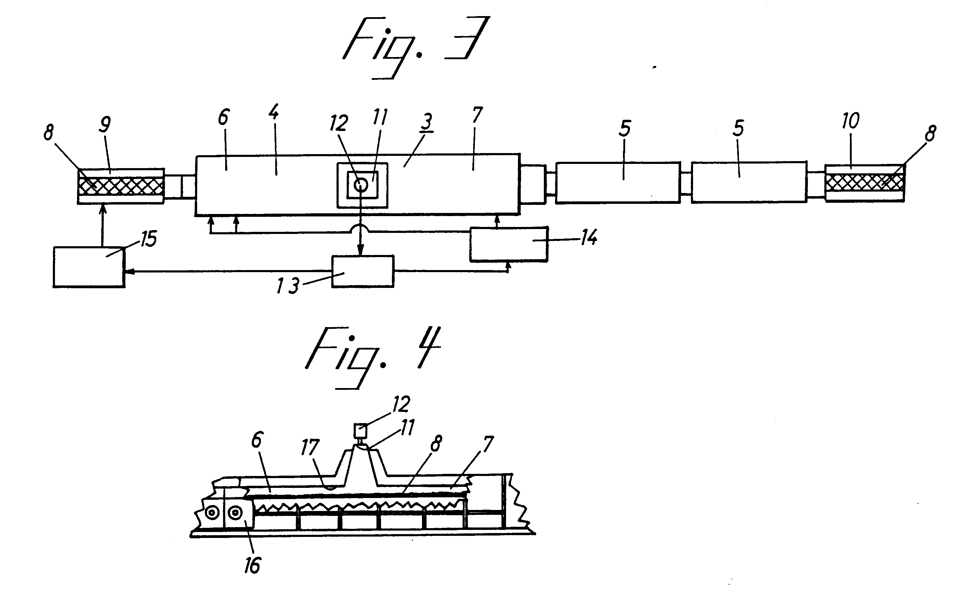

In other words, there is a time saving represented by the difference between the amount of time that the thicker portions take to reach the brazing temperature from the normal temperature and from the temperature to which they are preheated. This is illustrated in Figure 2, where the curve 1' meets the curve 2'. Subsequent heating to the brazing temperature then entails the curve 1' being at the higher temperature for substantially less the curve represented by 1 in Figure 1. The total time for the thinner portions spent at the brazing temperature is indicated by T and T' in Figures 1 and 2, respectively.

The temperature to which the article is preheated is preferably one at which the material of the components will not be adversely affected during the time it spends at that temperature. Likewise, it is also preferable and highly desirable that, while the above condition is fulfilled, the preheating temperature should be as near the brazing temperature as possible, so that there is the minimum time difference between portions of differing heat capacities reaching the required temperature.

It will be appreciated that, during the preheating process, components of differing heat capacities will reach the relevant temperature at different times. It is not essential that the different components reach exactly the same temperature, only that the components of higher heat capacity reach a sufficiently high temperature that, when the article is heated to brazing temperature, the components of lower capacity do not have to spend considerably longer at the brazing temperature while the remainder heat up.

As a rule, we have found that a preheating difference of about 20°C between components is acceptable. Any more than this is generally inconvenient, and will usually require longer brazing times, something the invention is intended to overcome.

In order to ensure that the component parts of the article have at least reached the desired minimum temperature, any suitable measuring means may be employed. In general, such means will include an infrared or radiation meter which can monitor the progress of the article through a suitable window which passes the relevant radiation, for example.

The furnace employed in the method of the present invention may be any that is suitable. The only requirement is that the articles be preheated before heating to brazing temperature. This may either involve separate furnaces so linked as to permit transfer of articles between them without losing appreciable quantities of heat, or may comprise one furnace having portions whichh are at appropriate temperatures.

The articles are passed through the furnace, or furnaces, by any suitable means, but generally by means of a conveyor belt. The conveyor belt is ideally adapted to operate at different speeds to ensure the desired degree of preheating and exposure to brazing temperature. More preferably, the speed of the belt is determined according to the data provided by the heat monitor described above. The data may be processed in any conventional manner, and the output fed to the controls of the belt.

Therefore, it is an advantage of the present invention that an article consisting of a plurality of parts is preheated to a high temperature evenly as a whole, with consequently minimisation of exposure of the article to high brazing temperatures.

It is preferred that preheating of the article is so controlled that a heat-pattern such as shown in Figure 2 is obtained for a comparable article.

Various embodiments and aspects of the present invention will now be discussed in more detail. The following is by way of exemplification and is not necessarily limiting.

In an alternative aspect, there is provided a brazing method by a continuous furnace in which metallic articles to be brazed with a solder and flux mounted on portions of the articles consisted of a plurality of parts are continuously passed through elongated tunnel-like furnace chambers, preheated to a preheating temperature which is adjacent to a brazing temperature at which the solder and flux become liquid, subsequently heated to the brazing temperature, and then cooled, it is characterised in that in order to preheat the articles so that each parts of them may reach around the preheating temperature almost evenly, temperatures of the parts are remotely sensed through their infrared energies, transfer speeds of the articles during the preheating are controlled with reference to a difference of temperatures among the parts which have been sensed, and a period of time for which the articles are subjected to the brazing temperature is controlled with reference to the transfer speeds at which the articles have been preheated.

Such a brazing method may be performed such that the period of time for which the articles are subjected to the brazing temperature is controlled by shortening or lengthening a brazing chamber in which the brazing temperature works.

Preferably, the period of time for which the articles are subjected to the brazing temperature is controlled by having the articles pass at a variably controlled speed though a brazing chamber in which the brazing temperature works.

The infrared energies of the articles are preferably sensed through a window made of anti-thermal glass which is hermetically and heat insulatingly provided to a part of metallic muffle composing the elongated tunnel-like furnace chambers.

In particular, it is preferred that the shortening or lengthening of the brazing chamber is made by having the brazing temperature work selectively in the chamber.

In general, temperature distributions of each of the component parts of an article to be brazed are sensed by means of their infrared energies at a reference temperature before they are heated to a desired brazing temperature. The information thus obtained is utilised to change a speed of a conveyor belt so as to minimise, in advance of subjecting the article to a high brazing temperature, a difference of temperatures induced from the above temperature distributions. Since the article is heated evenly as a whole, it is then possible to expose the article to the high brazing temperature for a minimum period of time.

Infrared energies of each of the component parts of an article during preheating may be remotely sensed by an infrared camera or a radioactive meter, and the resultant data continuously analysed. Referring to Figure 2, for example, when a large difference of temperature d between a temperature curve 1' for a thin part and another curve 2' for a thick part is found, the transfer speed of the article within the continuous furnace for preheating is slowed, so that the temperature of the thick part is able to more nearly approximate the temperature of the thinner part. In such a manner is the difference of temperature made as small as possible. This is illustrated by d' before having the article subjected to the desired or predetermined brazing temperature in Figure 2.

Thus, when the article is preheated so that its temperature is raised evenly as a whole, the time required to subject it to a high brazing temperature is reduced, as indicated in Figure 2 by T'.

It will be appreciated that, when temperature distribution in the preheated article is not particularly uneven, then it can be transferred faster through the preheating chamber.

Where there is only one belt, then when the transfer speed of the conveyor belt circulating through the continuous furnace is slowed in order to compensate or normalise a difference of temperatures of the parts, the period of time for which the article is subjected to a high brazing temperature in a brazing chamber also becomes longer. This is against the object of the present invention. Accordingly, it is preferable to divide the brazing chamber into several sections. When the conveyor belt is moved comparatively slowly, only some of the sections will be worked and, when the belt moves fast, all of them will be worked.

For this purpose, the conveyor belt may be divided to one circulating in the preheating chamber and another circulating in the brazing chamber, for example, so that they can be moved independently to each other at a speed suitable to the purpose.

The present invention will now be described in more detail with reference to the accompanying drawings, in which:

Figure 1 shows a conventional temperature pattern of an article when heated for brazing in a continuous furnace;

Figure 2 shows a graph to show how the article is elevated of its temperature in accordance with the present invention;

Figure 3 is an explanatory plan view of a preferable continuous furnace for practising the present invention; and

Figure 4 is an explanatory and sectional view of a part of the furnace shown in Figure 3.

A continuous furnace 3 shown in Figure 3 has a heating chamber 4 and a cooling chamber 5. The heating chamber is consisted of a preheating zone 6 and a brazing zone 7. A conveyor belt 8 which circulates in the furnace is variable at its speed by a driving device 9 and a driven device 10. As shown in Figures 3 and 4, particularly Figure 4, the numeral 11 represents a heat-proof glass window which is provided to a part of metallic muffle 17 of the heating chamber 4 and which is thermally and hermetically insulated from walls of the furnace so that it will not harm hermetic and heating features of the muffle. At the window, there is provided an infrared camera 12 to sense remotely through the window infrared energies of an article transferred through the continuous furnace 3 by the conveyor belt 8. The infrared camera may be replaced by a radioactive meter.

Numeral 13 indicates a device for analysing thermal images of the article caught by the infrared camera 12. Output signals or data taken out from the device 13 are sent to a temperature-control panel 15.

The heat-control panel 14 works to control, by the signals sent thereto, heaters (not shown) for the preheating zone 6 and the brazing zone 7 of the heating chamber 4, while the speed-control panel 15 controls likewise a transfer speed of the driving device 9, so that they make the article have a temperature pattern of Figure 2 when it is preheated and heated for brazing.

The following Examples are for illustration only.

EXAMPLE 1

In a continuous furnace having the above mentioned structure, an article consisting of steel parts was brazed with a copper solder.

The article brazed in accordance with the present invention had the shape of U turned sideways. The upper lateral part was a steel sheet of 1 mm thickness, and the lower lateral part was a steel sheet of 5 mm thickness. These were joined by a vertical steel sheet of 1 mm thickness.

The brazing process employed a solder melting at 1,083°C. The three sheets which were provisionally assembled in the shape of the article and provided with the solder at the portions to be brazed were passed through the preheating zone and the brazing zone for brazing then at a predetermined brazing temperature of 1,100°C, and subsequently transferred to the cooling chamber. The mean temperatures of the upper thin sheet and the vertical thin sheet at the preheating zone before attaining the desired brazing temperature of 1,100°C were 1,050°C when observed by the infrared camera 12 and the analysing device 13. The mean temperature of the lower thick sheet was also observed and calculated by the infrared camera and the analysing device to know the difference of temperatures between the upper and vertical thin sheets and the lower thick sheet.

In order to know how a speed of the conveyor belt influences to minimise the difference of temperatures, the speed was changed to various values by the driving device 15, while it was controlled to have the article subjected to the desired brazing temperature for 3 minutes at each instances. In other words, the speed of conveyor belt was changed from 50 mm/minute to 800 mm/minute, and after such preheating, the article was heated at 1,100°C always for 3 minutes for brazing by controlling an effective heating length of the brazing zone in accordance with the speed of the belt then prevailing with reference to the signals from the device 13.

The results were shown in the following Table 1.

## Table 1

### (Brazing of steel article by copper solder)

| Transfer speed of belt (x10 mm/minute) | Temperature | | | Time for keeping at a desired brazing temperature (1,100°C) | Brazing results |
|---|---|---|---|---|---|
| | High temperature parts (upper & vertical sheets) | Low temperature parts (lower sheets) | Difference of temperature | | |
| 5 | 1,050°C | 1,048°C | 2°C | 3 minutes | good |
| 10 | 1,050°C | 1,042°C | 8°C | 3 minutes | good |
| 20 | 1,050°C | 1,033°C | 17°C | 3 minutes | good |
| 40 | 1,050°C | 1,011°C | 39°C | 3 minutes | no good |
| 80 | 1,050°C | 984°C | 66°C | 3 minutes | no good |

As shown in Table 1, good brazing results were obtained where the difference of temperatures d' of the parts were within about 20°C at the time when the upper and vertical thin sheets were preheated to 1,050°C before they attained the desired brazing temperature of 1,100°C.

Therefore, good brazing can be achieved by sensing, through infrared energies, a temperature distribution of component parts of an article to be brazed and by controlling a speed of a conveyor belt by means of the speed control panel 15 to which signals thus sensed are input so that each component parts will be preheated with a difference of temperature within 20°C compared to a reference temperature of 1,050°C for example. The signals are also sent to the temperature control panel 14 for controlling an effective heating length in the brazing zone so that the article is kept at the brazing temperature only for a predetermined short period of time.

## EXAMPLE 2

A further article, this time made from aluminium (3003 aluminium) parts, was brazed using a solder of Al-Si alloy. The article had the same structure as in Example 1. The results are shown in the following Table 2.

EP 0 514 138 A1

## Table 2.
### (Brazing of steel article by Al-Si alloy solder)

Temperature

| Transfer speed of belt (x10 mm/minute) | High temperature parts (upper & vertical sheets) | Low temperature parts (lower sheets) | Difference of temperature | Time for keeping at a desired brazing temperature (1,100°C) | Brazing results |
|---|---|---|---|---|---|
| 5cm/minutes | 520°C | 518°C | 2°C | 5 minutes | good |
| 10cm/minutes | 520°C | 516°C | 4°C | 5 minutes | good |
| 20cm/minutes | 520°C | 512°C | 8°C | 5 minutes | good |
| 40cm/minutes | 520°C | 497°C | 23°C | 5 minutes | no good |
| 80cm/minutes | 516°C | 473°C | 47°C | 5 minutes | no good |

As shown in Table 2, when the difference of temperature at a reference temperature of 520°C between the upper and vertical thin sheets and the lower thick sheet was below 8°C, good brazing results were obtained. It is a matter of course that so far as good brazing is obtainable, the speed shall be faster is view of more economic production.

## Claims

1. A method for brazing articles using a continuous furnace, characterised in that the component parts of the article, together with the solder, are assembled and preheated until said component parts have reached a substantially uniform temperature near but below the brazing temperature and, once they have been so heated, the component parts are heated to a temperature whereat the solder melts.

2. In a brazing method by a continuous furnace in which metallic articles to be brazed with a solder and flux mounted on portions of the articles consisted of a plurality of parts are continuously passed through elongated tunnel-like furnace chambers, preheated to a preheating temperature which is adjacent to a brazing temperature at which the solder and flux become liquid, subsequently heated to the brazing temperature, and then cooled, it is characterised in that in order to preheat the articles so that each parts of them may reach around the preheating temperature almost evenly, temperatures of the parts are remotely sensed through their infrared energies, transfer speeds of the articles during the preheating are controlled with reference to a difference of temperatures among the parts which have been sensed, and a period of time for which the articles are subjected to the brazing temperature is controlled with reference to the transfer speeds at which the articles have been preheated.

3. A method according to claim 1 or 2, wherein the component parts are kept at the temperature at which the solder melts for the minimum period necessary to effect brazing.

4. A method according to any preceding claim, wherein the temperature to which the article is preheated is such that the material of the components will not be adversely affected during the time spent at that temperature.

5. A method according to any preceding claim, wherein the preheating temperature is as near the brazing

6

temperature as possible.

6. A method according to any preceding claim, wherein the component parts are at temperatures differing by no more than 20°C, preferably by no more than 8°C, after preheating and before brazing.

7. A method according to any preceding claim, wherein a measuring means, preferably an infrared or radiation meter, is employed to monitor the progress of the article through a suitable window passing the relevant radiation in the furnace.

8. A method according to any preceding claim, wherein the articles are passed through the furnace, or furnaces, a conveyor belt capable of operating at different speeds to ensure the desired degree of preheating and exposure to brazing temperature, and wherein the speed of the belt is determined according to data provided by the measuring means of claim 7.

9. A brazing method according to any preceding claim, in which the period of time for which the articles are subjected to the brazing temperature is controlled by shortening or lengthening a brazing chamber in which the brazing temperature works, preferably wherein the shortening or lengthening of the brazing chamber is made by having the brazing temperature work selectively in the chamber.

10. A brazing method according to any preceding claim, in which the period of time for which the articles are subjected to the brazing temperature is controlled by having the articles pass at a variably controlled speed though a brazing chamber in which the brazing temperature works.

# Fig. 1

# Fig. 2

Fig. 3

Fig. 4

EP 0 514 138 A1

EP 0 514 138 A1

European Patent Office

**EUROPEAN SEARCH REPORT**

Application Number

| | DOCUMENTS CONSIDERED TO BE RELEVANT | | EP 92304274.1 |
|---|---|---|---|

| Category | Citation of document with indication, where appropriate, of relevant passages | Relevant to claim | CLASSIFICATION OF THE APPLICATION (Int. Cl.5) |
|---|---|---|---|
| A | DE - A - 3 806 753 (PACHSCHWÖLL) * Column 1, lines 65-69 - column 2, lines 1-8 * -- | 1-10 | B 23 K 3/04 |
| A | DE - A - 2 239 042 (SOCIETE ANONYME DES USINES CHAUSSON) * Page 3, lines 1-10 * -- | 1 | |
| A | US - A - 4 890 781 (JOHNSON) * Claims 35-39 * ---- | 1-10 | |
| | | | TECHNICAL FIELDS SEARCHED (Int. Cl.5) |
| | | | B 23 K 1/00 B 23 K 3/00 |

The present search report has been drawn up for all claims

| Place of search | Date of completion of the search | Examiner |
|---|---|---|
| VIENNA | 20-07-1992 | BENCZE |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................
& : member of the same patent family, corresponding document

EPO FORM 1503 03.82 (P0401)